# EUROPEAN PATENT SPECIFICATION

(11) **EP 1 528 091 B1**
(45) Date of publication and mention of the grant of the patent: **25.07.2007**
(21) Application number: 04025449.2
(22) Date of filing: 26.10.2004
(51) Int. Cl.: C09J 7/02, C09J 133/10, C09J 133/12, C08K 5/00

(54) **A pressure-sensitive adhesive tape**
Druckempfindliches Klebeband
Ruban adhésif sensible à la pression

(30) Priority: 31.10.2003 JP 2003372189
(43) Date of publication of application: 04.05.2005
(73) Proprietor: NITTO EUROPE N.V, 3600 Genk (BE); NITTO DENKO CORPORATION, Ibaraki-shi, Osaka 567-8680 (JP)
(72) Inventor: Suzuki, Toshitaka Nitto Europe N.V., 3600 Genk (BE); Issaris, Ann Nitto Europe N.V., 3600 Genk (BE); Thys, Edwin Nitto Europe N.V., 3600 Genk (BE); Eevers, Walter Nitto Europe N.V., 3600 Genk (BE); Yamamoto, Shouji Nitto Europe N.V., 3600 Genk (BE)
(74) Representative: Grünecker, Kinkeldey, Stockmair & Schwanhäusser Anwaltssozietät

(56) References cited:
- EP-A- 1 340 797
- US-A1- 2002 081 426
- DATABASE WPI Section Ch, Week 199629 Derwent Publications Ltd., London, GB; Class A28, AN 1996-283713 XP002315301 -& JP 08 120237 A (NIPPON SYNTHETIC CHEM IND CO) 14 May 1996 (1996-05-14)
- PATENT ABSTRACTS OF JAPAN vol. 1999, no. 03, 31 March 1999 (1999-03-31) & JP 10 316774 A (BANDO CHEM IND LTD), 2 December 1998 (1998-12-02)

## Description

### FIELD OF THE INVENTION

The present invention relates to a pressure-sensitive adhesive tape. The pressure-sensitive adhesive tape of the invention can be used for various purposes. The pressure-sensitive adhesive tape of the invention has a characteristic that the tape is excellent in initial adhesiveness and a rise in the adhesive force thereof with time is small, and is useful for articles from which the adhesive tape should be peeled. Furthermore, this invention relates to a pressure-sensitive adhesive agent which is used in the pressure-sensitive adhesive tape.

The pressure-sensitive adhesive tape of the invention is particularly useful as a pressure-sensitive adhesive tape used in the step of dicing a semiconductor wafer. The pressure-sensitive adhesive tape used in the dicing step is useful as a pressure-sensitive adhesive tape for dicing, which is used to fix an object to be diced, such as a semiconductor wafer, when the object is diced into small pieces, or a pressure-sensitive adhesive tape for picking up a semiconductor, which is used to pick up individuals of the diced object. Since a single pressure-sensitive adhesive tape is usually used to perform a process from the dicing step to the picking-up step, the pressure-sensitive adhesive tape of the present invention is particularly useful as a pressure-sensitive adhesive tape for working a semiconductor, which is used throughout this process. The pressure-sensitive adhesive tape of the invention can be used as a pressure-sensitive adhesive tape for dicing a silicon semiconductor, a compound semiconductor, a semiconductor package, glass or some other material. This invention also relates to a process for working a semiconductor wafer using the pressure-sensitive adhesive tape.

The pressure-sensitive adhesive tape of the invention can also be used as a surface protective tape or some other tape, which should be peeled again when a metal plate such as a stainless steel plate or an aluminum plate is worked, stored or transported.

### BACKGROUND OF THE INVENTION

In general, a soft polyvinyl chloride (PVC) film, which contains a plasticizer such as dioctyl phthalate (DOP), is widely used as a support for various pressure-sensitive adhesive tapes since the film has excellent mechanical properties (or have both of rigidity that PVC has and flexibility based on the plasticizer). For example, the soft PVC film is used as a support for a pressure-sensitive adhesive tape used in the step of dicing a semiconductor wafer since the film is excellent in vibration absorptivity, expandability and self-repairability after the film is expanded, which are necessary in the wafer-dicing step.

However, it is difficult for a pressure-sensitive adhesive tape using the soft PVC film as its support to gain sufficient initial adhesiveness because of the effect of the plasticizer contained in the soft PVC film. For example, when the pressure-sensitive adhesive tape using the soft PVC film as the support is used as a pressure-sensitive adhesive tape for dicing, a semiconductor wafer cannot be sufficiently held at the time of dicing the wafer. Thus, inconveniences such that chips are scattered are caused in the wafer-dicing step.

In order to solve such inconveniences, an improvement in the adhesive layer of the pressure-sensitive adhesive tape is usually performed. For example, suggested is an adhesive layer containing, as a base polymer thereof, an acrylic copolymer which has a carboxyl group as a functional group and is crosslinked with a crosslinking agent such as an isocyanate type crosslinking agent or a melamine type crosslinking agent. However, a rise in the adhesive force of this adhesive layer with time is large; consequently, there is caused another problem that the picking-up step after the dicing step cannot be easily attained.

As described above, a pressure-sensitive adhesive tape using a soft PVC film as its support cannot satisfy contradictory properties of sufficient initial adhesiveness and adhesive force stable over time. Accordingly, when the pressure-sensitive adhesive tape is used as a pressure-sensitive adhesive tape for dicing, the pressure-sensitive adhesive tape cannot satisfy two properties related to the holding of a semiconductor wafer at the time of dicing the wafer and the prevention of the generation of failure in the picking-up.

In order to obtain a pressure-sensitive adhesive tape satisfying the above-mentioned contradictory two properties, there is suggested a process of adding a minute amount of an additive such as methylenebisstearylamide to an adhesive layer in a soft PVC film to distribute the additive unevenly into the surface of the adhesive layer, thereby controlling the peeling of the tape (see JP-A-10-316774), or some other process. However, in the case that the peeling controlling agent is unevenly distributed in the surface, there arises a problem that this agent adheres as a contaminant to the surface of a semiconductor wafer to such a degree that the agent can be perceived with the naked eye. Therefore, the conventional pressure-sensitive adhesive tapes are not adhesive tapes which have the contradictory properties of the dicing property and the picking-up property and contain, in the adhesive layer surface thereof, only a small amount of contaminations.

When an adhesive layer is formed in a soft PVC film, it is impossible to ignore the effect of the transfer of a plasticizer contained in the film and the adhesive layer into the surface (aggregation breakdown based on the plasticization of the adhesive agent). Moreover, problems such that paste is generated when the PVC film is stored for a long term are also caused.

### SUMMARY OF THE INVENTION

An object of the present invention is to provide a pressure-sensitive adhesive tape which contains as its support soft polyvinyl chloride containing a plasticizer, can satisfy contradictory properties of initial adhesiveness and adhesive force stable over time, and have no problems related to surface contamination.

Another object of the present invention is to provide a pressure-sensitive adhesive tape for dicing which is made of the above-mentioned pressure-sensitive adhesive tape, and a process for working a semiconductor wafer, using the pressure-sensitive adhesive tape for dicing.

Still another object of the present invention is to provide a pressure-sensitive adhesive agent used for forming an adhesive layer of the above-mentioned pressure-sensitive adhesive tape.

The inventors have made eager investigations for attaining the above-mentioned objects to find out the following pressure-sensitive adhesive tape. Consequently, the present invention has been made.

Therefore, the present invention relates to a pressure-sensitive adhesive tape comprising a support and an adhesive layer or adhesive layers made of an adhesive agent comprising a base polymer and a crosslinking agent on a single surface of the support or on the surface and the other surface thereof,
characterized in that the support comprises soft polyvinyl chloride comprising a plasticizer, and
at least the adhesive agent on the single surface comprises, as a base polymer, an acrylic copolymer having a carboxyl group, and further comprises, as crosslinking agents, a mixture of crosslinking agents comprising an isocyanate type crosslinking agent, a glycidylamine type crosslinking agent, and a melamine type crosslinking agent.

In the above-mentioned pressure-sensitive adhesive tape, it is preferable that the glycidylamine type crosslinking agent is 1,3-bis(N,N-diglycidylaminomethyl)cyclohexane.

In the above-mentioned pressure-sensitive adhesive tape, it is preferable that the melamine type crosslinking agent is a butanol-modified melamine / formaldehyde resin.

It is preferable that the above-mentioned pressure-sensitive adhesive tape comprises 0.5 to 10 parts by weight of the isocyanate type crosslinking agent, 0.2 to 2 parts by weight of the glycidylamine type crosslinking agent, and 0.5 to 10 parts by weight of the melamine type crosslinking agent for 100 parts by weight of the acrylic copolymer.

The present invention also relates to a pressure-sensitive adhesive tape for dicing, characterized in that the above-mentioned pressure-sensitive adhesive tape is used in the step of dicing a semiconductor wafer.

The present invention also relates to a process for working a semiconductor wafer, characterized by comprising the step of using the above-mentioned pressure-sensitive adhesive tape for dicing to dice the semiconductor wafer.

The present invention also relates to a pressure-sensitive adhesive agent, characterized by being used for forming the adhesive layer of the above-mentioned pressure-sensitive adhesive tape and comprising, as a base polymer, an acrylic copolymer having a carboxyl group, and further comprises, as crosslinking agents, a mixture of crosslinking agents comprising an isocyanate type crosslinking agent, a glycidylamine type crosslinking agent, and a melamine type crosslinking agent.

As described above, the pressure-sensitive adhesive tape of the present invention is a tape wherein, as its support, soft PVC comprising a plasticizer is used. Its adhesive layer is made of an adhesive agent comprising, as a base polymer, an acrylic copolymer having a carboxyl group and further comprises, as crosslinking agents, three crosslinking agents of an isocyanate type crosslinking agent, a glycidylamine type crosslinking agent, and a melamine type crosslinking agent simultaneously. This adhesive layer makes it possible that the adhesive tape satisfies both of properties related to initial adhesiveness and adhesive force stable over time with a good balance even if a minute amount of a peeling controlling agent which remains as a contaminant is not used. The pressure-sensitive adhesive tape of this invention is a pressure-sensitive adhesive tape which is not easily affected by any plasticizer contained in the soft PVC.

The pressure-sensitive adhesive tape of the present invention having this characteristic is useful as a pressure-sensitive adhesive tape for dicing. That is, the pressure-sensitive adhesive tape of this invention is excellent in dicing property since the tape has a good initial adhesive force, and the adhesive tape also has a good picking-up property since the adhesive tape has adhesive force stable over time so that a rise in the adhesive force can be suppressed. Since the adhesive tape may not contain any peeling controlling agent, a problem of contaminating semiconductor wafers which is related to the peeling controlling agent is not caused.

In the case that an acrylic type copolymer containing a carboxyl group is used as a base polymer in an adhesive layer, it is common to use, as a crosslinking agent, an isocyanate type crosslinking agent, a glycidylamine type crosslinking agent, or a melamine type crosslinking agent singly, considering chemical reaction with the carboxyl group. It may be considered that two out of the crosslinking agents are used together with each other in order to control the molecular weight of the adhesive layer or the gel content therein. However, to use the two crosslinking agents together is mainly for complementing the reaction rate of main one out of the crosslinking agents with the other crosslinking agent. Thus, the two crosslinking agents are not regarded as agents having functions having independent of each other. It can be considered that, for example, an isocyanate type crosslinking agent or glycidylamine type crosslinking agent, which is reactive at ambient temperature, is complemented with a melamine crosslinking agent, which is reactive at high temperature but is chemically inactive at ambient temperature. It has been therefore considered that the number of crosslinking agents used from among these crosslinking agents is two at most and it is fruitless to increase the number.

In the present invention, the three crosslinking agents, which have different reaction rates (reaction conditions), are simultaneously blended. These crosslinking agents are used for purposes independent of each other, whereby the above-mentioned characteristic is satisfied.

It is known that when a glycidylamine type crosslinking agent is incorporated into an acrylic copolymer containing a carboxyl group, the molecular weight of the crosslinked molecule becomes small so that the movement of the main chain of the polymer is blocked, thereby stabilizing the adhesive force thereof over time. However, if the amount of the incorporated glycidylamine type crosslinking agent is made large, the initial adhesive force lowers remarkably. In order to complement this, an isocyanate type crosslinking agent is also used in the present invention, thereby raising the polarity of the outermost surface of the adhesive agent to raise the adhesiveness thereof. It has been never found out before this invention that initial adhesive force and adhesive force stability over time can be simultaneously ensured by using a glycidylamine type crosslinking agent and an isocyanate type crosslinking agent together, as described above. Generally, a glycidylamine type crosslinking agent and an isocyanate type crosslinking agent are each reactive with a carboxyl group at ambient temperature; therefore, it is not considered that one of the two agents complements the reaction rate of the other. It is an entirely new finding that independent properties of the two are exhibited, whereby the contradictory properties can be obtained.

In a PVC film, a plasticizer such as DOP is generally contained in a large amount. As a result, when the film is stored for a long term, the following phenomenon is generated: the plasticizer is shifted into the adhesive agent (in particular, the surface thereof) in the film so that the adhesive agent is plasticized to generate paste. This phenomenon cannot be solved by using an isocyanate type crosslinking agent and a glycidylamine type crosslinking agent alone or in combination thereof. Thus, in the present invention, a melamine type crosslinking agent is used together with the glycidylamine type crosslinking agent and the isocyanate type crosslinking agent. Namely, the three crosslinking agents are used together. The use of the melamine type crosslinking agent together makes it possible to solve this problem. As a result, the resultant adhesive tape can gain stable long-term stability. In general, any melamine type crosslinking agent has a large reaction rate at high temperature but has a remarkably small reaction rate at room temperature; therefore, in the case of using a melamine type crosslinking agent together, the agent has been used as a crosslinking agent for complementing an isocyanate type crosslinking agent or a glycidylamine type crosslinking agent. However, as described above, it is an entirely new finding that a melamine type crosslinking agent is not used as a crosslinking agent but used to prevent the plasticization of an adhesive agent in a PVC film, the plasticization being based on a plasticizer.

### DESCRIPTION OF THE EMBODIMENTS

The pressure-sensitive adhesive tape of the present invention is described hereinafter. The pressure-sensitive adhesive tape of the invention comprises a support and an adhesive layer or adhesive layers made of an adhesive agent comprising a base polymer and a mixture of crosslinking agents on a single surface of the support or on the surface and the other surface thereof. A separator or separators may be formed on the adhesive layer(s).

The support is made mainly of soft polyvinyl chloride (PVC), which contains a plasticizer. As the plasticizer, any plasticizer used in conventional soft PVC may be used without especial limitation. Examples thereof include dioctyl phthalate (DOP) and diisononyl phthalate (DINP). The plasticizer which conventional soft PVC contains is generally DOP, DINP or the like from the viewpoints of production quantity and costs; however, a low molecular plasticizer such as dibutyl phthalate (DBP) or an epoxy type polymer plasticizer may be used. These may be used in combination. The content of the plasticizer in PVC of the soft PVC is not particularly limited, and is usually from about 10 to 50 parts by weight, preferably from about 20 to 40 parts by weight for 100 parts by weight of PVC.

The thickness of the support (film) comprising the soft PVC is usually from about 50 to 200 µm, preferably from about 60 to 130 µm. If necessary, the support may be subjected to a conventional physical or chemical treatment such as mat treatment, corona discharge treatment or primer treatment.

At least the adhesive layer on the single surface of the support is made of an adhesive agent which comprises, as a base polymer, an acrylic copolymer having a carboxyl group and further comprises, as crosslinking agents, a mixture of crosslinking agents comprising an isocyanate type crosslinking agent, a glycidylamine type crosslinking agent, and a melamine type crosslinking agent.

The acrylic copolymer comprises alkyl (meth)acrylate as the main monomer unit and further comprises a carboxyl-containing monomer as a monomer unit.

The alkyl (meth)acrylate may be an alkyl (meth)acrylate having a normal or branched alkyl group having 30 or less carbon atoms, preferably 4 to 18 carbon atoms, examples of which include methyl, ethyl, propyl, isopropyl, n-butyl, t-butyl, isobutyl, amyl, isoamyl, hexyl, heptyl, cyclohexyl, 2-ethylhexyl, octyl, isooctyl, nonyl, isononyl, decyl, isodecyl, undecyl, lauryl, tridecyl, tetradecyl, stearyl, octadecyl, and dodecyl groups. The wording "alkyl (meth)acrylate" means alkyl acrylate and/or alkyl methacrylate. All words including "(meth)" in the present specification have similar meanings. These alkyl (meth)acrylates are used alone or in combination of two or more thereof.

Examples of the carboxyl-containing monomer include acrylic acid, methacrylic acid, carboxyethyl acrylate, carboxypentyl acrylate, itaconic acid, maleic acid, fumaric acid, and crotonic acid. The carboxyl-containing monomers are used alone or in combination of two or more thereof. About the ratio of the carboxyl-containing monomer(s) in the acrylic copolymer, the amount of the carboxyl-containing monomer(s) is from about 0.1 to 20 parts, preferably from about 0.5 to 15 parts by weight for 100 parts by weight of all monomers which constitute the acrylic copolymer.

Not only the alkyl (meth)acrylate and the carboxyl-containing monomer but also a different monomer copolymerizable therewith may be incorporated into the acrylic copolymer, thereby making it possible to improve the adhesiveness of the adhesive agent on the basis of the introduction of its functional group or polar group, or controlling the glass transition temperature of the copolymer to improve or modify the cohesive force or heat resistance. Examples of the different copolymerizable monomer used for this purpose include acid anhydride monomers such as maleic anhydride and itaconic anhydride; hydroxyl-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methyl acrylate; sulfonic acid group containing monomers such as styrenesulfonic acid, allylsulfonic acid, 2-(meth)acrylamide-2-methylpropanesulfonic acid, (meth)acrylamidepropanesulfonic acid, sulfopropyl (meth)acrylate, and (meth)acryloyloxynaphthalenesulfonic acid; phosphoric acid group containing monomers such as 2-hydroxyethylacryloylphosphate; and other monomers such as glycidylester (meth)acrylate, vinyl acetate, styrene, (meth)acrylonitrile, N-vinylpyrrolidone, (meth)acryloylmorpholine, cyclohexylmaleimide, isopropylmaleimide, and (meth)acrylamide. These copolymer monomers can be used alone or in combination of two or more thereof. About the ratio of the copolymerizable monomer(s) in the acrylic copolymer, the amount of the monomer(s) is from about 30 parts or less, preferably 15 parts or less by weight for 100 parts by weight of all monomers which constitute the acrylic copolymer.

If necessary, a polyfunctional monomer or some other monomer may be used as the copolymerizable monomer in order to subject the acrylic copolymer to crosslinking treatment or some other treatment. Examples of the monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexane(meth)acrylate, epoxy acrylate, polyester acrylate, and urethane acrylate. The polyfunctional monomers may be used alone or in combination of two or more thereof. About the ratio of the polyfunctional monomer(s) in the acrylic copolymer, the amount of the monomer(s) is from about 30 parts or less, preferably 15 parts or less by weight for 100 parts by weight of all monomers which constitute the acrylic copolymer.

Such an acrylic copolymer can be prepared by applying an appropriate polymerization method selected from solution polymerization, emulsion polymerization, bulk polymerization, suspension polymerization, and other polymerizations to a monomer mixture containing at least the alkyl (meth)acrylate and the carboxyl-containing monomer. The weight-average molecular weight of the acrylic copolymer is usually from about 200000 to 1500000, preferably from about 250000 to 1500000.

As the isocyanate type crosslinking agent, a crosslinking agent having at least two isocyanate groups can be used without especial limitation. Examples thereof include tolylene diisocyanate, diphenylmethane diisocyanate, hexamethylene diisocyanate, xylylene diisocyanate, and adducts thereof with an alcoholic compound such as trimethylolpropane. However, the isocyanate type crosslinking agent is not limited to these examples. Specific examples of the crosslinking agent include Colonate (transliteration) L (trade name) manufactured by Nippon Polyurethane Industry Co., Ltd., and DESMODUR-L75 (trade name) manufactured by BAYER. A. G. as commercially available adducts of tolylene diiosyanate with trimethylolpropane; and Milionate (transliteration) MR-300 (trade name) manufactured by Nippon Polyurethane Industry Co., Ltd. as commercially available diphenylmethane diisocyanate.

As the glycidylamine type crosslinking agent, a crosslinking agent which has at least two glycidylamino groups and reacts chemically with a carboxyl group rapidly at ambient temperature (20 to 30 °C) can be used without especial limitation. An example thereof is 1,3-bis(N,N-diglycidylaminomethyl)cyclohexane. A specific example thereof is TETRAD-C (trade name) manufactured by Mitsubishi Gas Chemical Co., Inc. as commercially available 1,3-bis(N,N-diglycidylaminomethyl)cyclohexane.

The melamine type crosslinking agent is used to prevent the plasticization of the adhesive agent by the plasticizer contained in the soft PVC. An example thereof is butanol-modified melamine/formaldehyde resin, to which the melamine type crosslinking agent is not limited. Specific examples thereof include Super Beckhamine (transliteration) J-82060N manufactured by Nippon Polyurethane Industry Co., Ltd., and Luwipal 012 manufactured by BASF Co. as commercially available butanol-modified melamine/formaldehyde resin.

The blend ratio between the above-mentioned crosslinking agents is not particularly limited. The amount of the isocyanate type crosslinking agent is preferably from 0.5 to 10 parts, more preferably from 1 to 5 parts by weight for 100 parts by weight of the acrylic copolymer from the viewpoints of the effect of raising the polarity of the surface of the adhesive layer and the productivity of the adhesive tape. If the isocyanate type crosslinking agent is incorporated in a larger amount, the pot life of the adhesive agent becomes short so that the productivity lowers. The amount of the glycidylamine type crosslinking agent is preferably from 0.2 to 2 parts, more preferably from 0.3 to 1 part by weight from the viewpoints of the initial adhesiveness of the adhesive tape and the stability of the adhesive force thereof over time. The amount of the melamine type crosslinking agent is preferably from 0.5 to 10 parts by weight since the generation of paste by action of the plasticizer can be prevented and the initial adhesive force and the adhesive force stability over time, based on the use of both of the isocyanate type crosslinking agent and the glycidylamine type crosslinking agent, can be kept with a good balance.

The pressure-sensitive adhesive agent of the present invention can contain a plasticizer besides the acrylic copolymer and the three crosslinking agents. The kind of the plasticizer which can be used is not particularly limited. Examples thereof are the same plasticizers as are incorporated into PVC. The blend amount of the plasticizer is not particularly limited. The amount thereof is generally from about 0 to 100 parts, preferably from about 20 to 80 parts by weight for 100 parts by weight of the acrylic copolymer. If necessary, the adhesive agent may contain various additives such as a tackifier, a filler, an age resistor, a coloring agent, an antioxidant, and an ultraviolet absorber. The ratio of each of the additives may be selected at will.

The pressure-sensitive adhesive tape of the invention can be produced, for example, by applying the adhesive agent onto a surface of the support, drying the agent, and (optionally heating the agent to crosslink the components in the agent) to form an adhesive layer, and optionally sticking a separator onto the surface of this adhesive layer. Besides, a method of forming an adhesive layer on the separator, and then sticking the resultant onto the support, or some other method can be adopted. The thickness of the adhesive layer is not particularly limited, and is usually from about 1 to 30 µm, preferably from about 5 to 15 µm.

The separator is formed if necessary, in order to make the adhesive layer smooth for label working. Examples of the material which constitutes the separator include paper and a synthetic resin film made of polyethylene, polypropylene, or polyethylene terephthalate. If necessary, one surface or both surfaces of the separator may be subjected to peeling treatment such as silicone treatment, long chain alkyl treatment, or fluorine treatment in order to make the peelability thereof from the adhesive layer high. In accordance with a purpose for making the rigidity of the separator high, or some other purpose, the separator may be subjected to monoaxial or biaxial drawing treatment or be laminated with a different plastic film or the like. The thickness of the separator is usually from 10 to 200 µm, preferably from 25 to 100 µm. In the case that the separator is used, the adhesive tape can be made into a roll form. However, the form of the adhesive tape is not limited to this form.

The pressure-sensitive adhesive tape of the invention can be used for the above-mentioned various purposes. The adhesive tape is used, in particular, in the step of dicing a semiconductor wafer, and in the step of picking up the diced wafer. The dicing step and the picking-up step may be performed in any usually way.

The present invention is more specifically described on the basis of the following examples. However, this invention is not limited to these examples.

### Example 1

### (Support)

A soft PVC film was used which contained 27 parts by weight of DOP for 100 parts by weight of PVC having a polymerization degree of 1050 and had a thickness of 70 µm.

### (Preparation of a pressure-sensitive adhesive agent)

Eighty five parts by weight of butyl acrylate, 15 parts by weight of acrylonitrile and 2.5 parts by weight of acrylic acid were copolymerized with each other by emulsion polymerization to yield a solution containing an acrylic copolymer having a weight-average molecular weight of 800000.

Into 100 parts by weight of a solid matter in this polymer solution were incorporated 3 parts by weight of an isocyanate type crosslinking agent, Colonate (transliteration) L (trade name) manufactured by Nippon Polyurethane Industry Co., Ltd., 0.5 part by weight of a glycidylamine type crosslinking agent, TETRAD-C (trade name) manufactured by Mitsubishi Gas Chemical Co., Inc., 1 part by weight of a melamine type crosslinking agent, Super Beckhamine (transliteration) J-82060N (trade name) manufactured by Nippon Polyurethane Industry Co., Ltd., and 60 parts by weight of DOP, so as to prepare a pressure-sensitive adhesive agent solution.

### (Production of a pressure-sensitive adhesive tape)

The adhesive agent solution prepared as described above was applied onto a single surface of the above-mentioned support, and then the resultant was dried at 130 °C for 90 seconds to form an adhesive layer having a thickness of 10 µm. Next, a separator obtained by subjecting a surface of a polyethylene terephthalate film having a thickness of 38 µm to silicone treatment was stuck onto the surface of the adhesive layer to produce a pressure-sensitive adhesive tape.

### Example 2

### (Preparation of a pressure-sensitive adhesive agent)

A pressure-sensitive adhesive agent solution was prepared in the same way as in Example 1 except that the following were used as crosslinking agents instead of the crosslinking agents in Example 1: 5 parts by weight of an isocyanate type crosslinking agent, DESMODUR-L75 (trade name) manufactured by BAYER. A. G., 0.5 part by weight of the glycidylamine type crosslinking agent, TETRAD-C (trade name) manufactured by Mitsubishi Gas Chemical Co., Inc., and 3 parts by weight of a melamine type crosslinking agent, Luwipal 012(trade name) manufactured by BASF Co.

### (Production of a pressure-sensitive adhesive tape)

A pressure-sensitive adhesive tape was produced in the same way as in Example 1 except that the adhesive agent solution prepared as described above was used.

### Comparative Example 1

### (Preparation of a pressure-sensitive adhesive agent)

A pressure-sensitive adhesive agent solution was prepared in the same way as in Example 1 except that only 3 parts by weight of the isocyanate type crosslinking agent, DESMODUR-L75 (trade name) manufactured by BAYER. A. G. were used as a crosslinking agent instead of the crosslinking agents in

### Example 1.

### (Production of a pressure-sensitive adhesive tape)

A pressure-sensitive adhesive tape was produced in the same way as in Example 1 except that the adhesive agent solution prepared as described above was used.

### Comparative Example 2

### (Reparation of a pressure-sensitive adhesive agent)

A pressure-sensitive adhesive agent solution was prepared in the same way as in Example 1 except that only 0.5 part by weight of the glycidylamine type crosslinking agent, TETRAD-C (trade name) manufactured by Mitsubishi Gas Chemical Co., Inc. was used as a crosslinking agent instead of the crosslinking agents in Example 1.

### (Production of a pressure-sensitive adhesive tape)

A pressure-sensitive adhesive tape was produced in the same way as in Example 1 except that the adhesive agent solution prepared as described above was used.

### Comparative Example 3

### (Preparation of a pressure-sensitive adhesive agent)

A pressure-sensitive adhesive agent solution was prepared in the same way as in Example 1 except that only 10 parts by weight of the melamine type crosslinking agent, Super Beckhamine (transliteration) J-82060N (trade name) manufactured by Nippon Polyurethane Industry Co., Ltd. were used as a crosslinking agent instead of the crosslinking agents in Example 1.

### (Production of a pressure-sensitive adhesive tape)

A pressure-sensitive adhesive tape was produced in the same way as in Example 1 except that the adhesive agent solution prepared as described above was used.

### Comparative Example 4

### (Preparation of a pressure-sensitive adhesive agent)

A pressure-sensitive adhesive agent solution was prepared in the same way as in Example 1 except that 5 parts by weight of the isocyanate type crosslinking agent, DESMODUR-L75 (trade name) manufactured by BAYER. A. G. and 0.5 part by weight of the glycidylamine type crosslinking agent, TETRAD-C (trade name) manufactured by Mitsubishi Gas Chemical Co., Inc. were used as crosslinking agents instead of the crosslinking agents in Example 1.

### (Production of a pressure-sensitive adhesive tape)

A pressure-sensitive adhesive tape was produced in the same way as in Example 1 except that the adhesive agent solution prepared as described above was used.

### Comparative Example 5

### (Preparation of a pressure-sensitive adhesive agent)

A pressure-sensitive adhesive agent solution was prepared in the same way as in Example 1 except that 3 parts by weight of the isocyanate type crosslinking agent, DESMODUR-L75 (trade name) manufactured by BAYER. A. G. and 2 parts by weight of the melamine type crosslinking agent, Super Beckhamine (transliteration) J-82060N (trade name) manufactured by Nippon Polyurethane Industry Co., Ltd. were used as crosslinking agents instead of the crosslinking agents in Example 1.

### (Production of a pressure-sensitive adhesive tape)

A pressure-sensitive adhesive tape was produced in the same way as in Example 1 except that the adhesive agent solution prepared as described above was used.

### Comparative Example 6

### (Preparation of a pressure-sensitive adhesive agent)

A pressure-sensitive adhesive agent solution was prepared in the same way as in Example 1 except that 5 parts by weight of the isocyanate type crosslinking agent, DESMODUR-L75 (trade name) manufactured by BAYER. A. G. and 0.5 part by weight of the glycidylamine type crosslinking agent, TETRAD-C (trade name) manufactured by Mitsubishi Gas Chemical Co., Inc. were used as crosslinking agents instead of the crosslinking agents in Example 1, and further 3 parts by weight of 1,3,5-tris(2-hydroxyethyl)cyanuric acid was added.

### (Production of a pressure-sensitive adhesive tape)

A pressure-sensitive adhesive tape was produced in the same way as in Example 1 except that the adhesive agent solution prepared as described above was used.

### Comparative Example 7

### (Preparation of a pressure-sensitive adhesive agent)

A pressure-sensitive adhesive agent solution was prepared in the same way as in Example 1 except that 5 parts by weight of the isocyanate type crosslinking agent, DESMODUR-L75 (trade name) manufactured by BAYER. A. G. and 0.5 part by weight of the glycidylamine type crosslinking agent, TETRAD-C (trade name) manufactured by Mitsubishi Gas Chemical Co., Inc. were used as crosslinking agents instead of the crosslinking agents in Example 1 and further 3 parts by weight of 2,4,6-tris(hydroxyaryl)-1,3,5-triazine were added.

### (Production of a pressure-sensitive adhesive tape)

A pressure-sensitive adhesive tape was produced in the same way as in Example 1 except that the adhesive agent solution prepared as described above was used.

### Comparative Example 8

### (Preparation of a pressure-sensitive adhesive agent)

A pressure-sensitive adhesive agent solution was prepared in the same way as in Example 1 except that 3 parts by weight of the isocyanate type crosslinking agent, Colonate (transliteration) L (trade name) manufactured by Nippon Polyurethane Industry Co., Ltd. were used as a crosslinking agent and further 0.2 part by weight of dioctyltin laurate was added.

### (Production of a pressure-sensitive adhesive tape)

A pressure-sensitive adhesive tape was produced in the same way as in Example 1 except that the adhesive agent solution prepared as described above was used.

### (Evaluation tests)

The pressure-sensitive adhesive tapes obtained in the working examples and the comparative Examples were evaluated by the following methods. The results are shown in Tables 1 to 4. Comparative Examples 6 and 7 were evaluated only about the storage stability of the adhesive tapes.

### (Adhesive strength stability)

Each of the adhesive tapes obtained in the working examples and the comparative examples was cut into a width of 20 mm. Each of the resultant pieces was stuck onto a silicon wafer (CZ-N POLISHED WAFER 4 inches N(100) 2.5 3.5, manufactured by Shin-Etsu Handotai Co., Ltd.) under conditions of two reciprocating motions (0.3 m/min.) of a 2-kg roller. After the sticking, the resultant was stored at room temperature (23 °C)and 50 %RH for 30 minutes or 7 days, or at 40 °C for 7 days. After the storage, an Instron model tensile tester was used to measure the peeling strength (adhesive strength in the unit of N/20 mm) of the stored tape at room temperature (23 °C) and 50 %RH under conditions of a tensile speed of 0.3 m/min. and a peeling angle of 180°. The results are shown in Table 1.

**Table 1**

| | | Example 1 | Example 2 | Comparative Example 1 | Comparative Example 2 | Comparative Example 3 | Comparative Example 4 | Comparative Example 5 | Comparative Example 8 |
|---|---|---|---|---|---|---|---|---|---|
| Adhesive strength (N/20mm) | 23°C for 30 minutes | 0.8 | 0.9 | 1.0 | 1.0 | 1.0 | 0.7 | 1.0 | 0.7 |
| | 23°C for 7 days | 1.0 | 1.2 | 2.6 | 1.8 | 2.5 | 1.0 | 2.2 | 1.0 |
| | 40°C for 7 days | 1.5 | 1.5 | 4.5 | 2.5 | 4.0 | 1.5 | 3.5 | 1.3 |

### (Dicing adaptability: scattering of chips at the time of dicing)

Each of the adhesive tapes obtained in the working examples and the comparative examples was subjected to a dicing test under the following conditions, and then the number (per 6-inch wafer) of chips scattered at the time of dicing a wafer on which the tape was stuck was checked. The results are shown in Table 2.

| | |
|---|---|
| Blade type: | NBC-ZH2O50 27HECC (manufactured |
| | by Disco Co.) |
| Spindle rotating number: | 40000 rpm |
| Cutting speed: | 80 mm/second |
| Cut depth into the tape: | 25 µm |
| Chip size: | 2.5 mm × 2.5 mm, and 7.0 mm × 7.0 |
| | mm |
| Water flow rate: | 1.0 L/minute |

**Table 2**

| | | Example 1 | Example 2 | Comparative Example 1 | Comparative Example 2 | Comparative Example 3 | Comparative Example 4 | Comparative Example 5 | Comparative Example 8 |
|---|---|---|---|---|---|---|---|---|---|
| Scattered chips (the number thereof per wafer) | 2.5mm square | 20 | 12 | 3 | 15 | 28 | 25 | 12 | 60 |
| | 7.0mm square | 0 | 0 | 0 | 0 | 0 | 0 | 0 | 2 |

### (Dicing adaptability: picking-up property after storage)

After the wafer on which each of the tapes was stuck was subjected to the dicing test under the above-mentioned conditions, the wafer was stored at 23 °C for one day or 7 days, or at 40 °C for 7 days. After the storage, the wafer was subjected to a picking-up test under the following conditions in order to check the picking-up property over time. In this way, the stability of the picking-up over time was checked. The stability of the picking-up is represented by the success ratio (%) of the picking-up in the case that the picking-up test was made 30 times. The results are shown in Table 3.

### CPS-100 (manufactured by NEC Machinery Corp.)

| | |
|---|---|
| Chip size: | 7.0 mm × 7.0 mm |
| Needle tip shape: | 250 µm radius |
| Needle arrangement: | four needles, 4 mm × 4 mm |
| Thrusting-up amount: | 800 µm |

**Table 3**

| | | Example 1 | Example 2 | Comparative Example 1 | Comparative Example 2 | Comparative Example 3 | Comparative Example 4 | Comparative Example 5 | Comparative Example 8 |
|---|---|---|---|---|---|---|---|---|---|
| Success ratio (%) | 23°C for one day | 100 | 100 | 100 | 100 | 100 | 100 | 100 | 100 |
| | 23°C for 7 days | 100 | 100 | 0 | 0 | 0 | 100 | 0 | 100 |
| | 40°C Cor 7 days | 90 | 100 | 0 | 0 | 0 | 70 | 0 | 100 |

### (Storage stability of the adhesive tapes)

The adhesive tapes obtained in the working examples and the comparative examples were each stuck onto a silicon wafer (CZ-N POLISHED WAFER 4 inches N(100) 2.5 3.5, manufactured by Shin-Etsu Handotai Co., Ltd.) immediately after the adhesive tapes were each produced(initial), or after the adhesive tapes were each stored at ambient temperature (23 °C) for 80 days, under a humidifying condition (40 °C and 92 %RH) for 30 days or under a heating condition (50 °C) for 30 days. The resultants were each stored at 23 °C and 50 %RH for 24 hours. Thereafter, contamination (paste) on each of the silicon wafers surface thereof was evaluated with the naked eye in accordance with the following criterion.
○: No paste remained. ×: Paste remained. -: No data for comparison. The results are shown in Table 4.

**Table 4**

| | | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Contamination | Initial | ○ | ○ | ○ | ○ | ○ | ○ | ○ | ○ | ○ | ○ |
| (paste) | Ambient temperature | ○ | ○ | ○ | ○ | ○ | ○ | ○ | ○ | ○ | ○ |
| | Humidifying condition | ○ | ○ | ○ | × | ○ | × | ○ | × | × | × |
| | Heating condition | ○ | ○ | × | × | ○ | × | ○ | - | - | × |

## Claims

1. A pressure-sensitive adhesive tape comprising a support and an adhesive layer or adhesive layers made of an adhesive agent comprising a base polymer and crosslinking agents on a single surface of the support or on the surface and the other surface thereof,
**characterized in that** the support comprises soft polyvinyl chloride comprising a plasticizer, and
at least the adhesive agent on the single surface comprises, as a base polymer, an acrylic copolymer having a carboxyl group and further comprises, as the crosslinking agents, a mixture of crosslinking agents comprising an isocyanate type crosslinking agent, a glycidylamine type crosslinking agent, and a melamine type crosslinking agent.

2. The pressure-sensitive adhesive tape according to claim 1, wherein the glycidylamine type crosslinking agent is 1,3-bis (N,N-diglycidylaminomethyl)cyclohexane.

3. The pressure-sensitive adhesive tape according to claim 1 or 2, wherein the melamine type crosslinking agent is a butanol-modified melamine/formaldehyde resin.

4. The pressure-sensitive adhesive tape according to any one of claims 1 to 3, which comprises 0.5 to 10 parts by weight of the isocyanate type crosslinking agent, 0.2 to 2 parts by weight of the glycidylamine type crosslinking agent, and 0.5 to 10 parts by weight of the melamine type crosslinking agent for 100 parts by weight of the acrylic copolymer.

5. Use of the pressure-sensitive adhesive tape according to any one of claims 1 to 4 for dicing of a semiconductor wafer.

6. A process for working a semiconductor wafer, **characterized by** comprising the step of using the pressure-sensitive adhesive tape for dicing according to claim 5 to dice the semiconductor wafer.

7. A pressure-sensitive adhesive agent comprising, as a base polymer, an acrylic copolymer having a carboxyl group, and further comprising, as crosslinking agents, a mixture of crosslinking agents comprising an isocyanate type crosslinking agent, a glycidylamine type crosslinking agent, and a melamine type crosslinking agent.

8. Use of the pressure-sensitive adhesive agent of claim 7 for forming the adhesive layer of the pressure-sensitive adhesive tape according to any of claims 1 to 4.

9. The pressure-sensitive adhesive tape according to any one of claims 1 to 4, wherein said adhesive agent does not contain any peeling-controlling agent.

## Patentansprüche

1. Ein druckempfindliches Klebeband, umfassend einen Träger und eine Klebeschicht oder Klebeschichten, geformt aus einem Haftvermittler, welcher ein Basispolymer und Vernetzungsmittel umfasst, auf einer einzelnen Oberfläche des Trägers oder auf der Oberfläche und der anderen Oberfläche davon,
**dadurch** charakterisiert, dass der Träger ein weiches Polyvinylchlorid, umfassend einen Weichmacher, umfasst, und
der mindestens eine Haftvermittler auf der einzelnen Oberfläche als ein Basispolymer ein Acrylcopolymer, welches eine Carboxylgruppe hat, umfasst, und weiterhin als die Vernetzungsmittel eine Mischung aus Vernetzungsmitteln umfasst, umfassend ein Vernetzungsmittel vom Isocyanat-Typ, ein Vernetzungsmittel vom Glycidylamin-Typ und ein Vernetzungsmittel vom Melamin-Typ.

2. Das druckempfindliche Klebeband gemäß Anspruch 1, worin das Vernetzungsmittel vom Glycidylamin-Typ ein 1,3-Bis (N,N-diglycidylaminomethyl)cyclohexan ist.

3. Das druckempfindliche Klebeband gemäß Anspruch 1 oder 2, worin das Vernetzungsmittel vom Melamin-Typ ein Butanol-modifiziertes Melamin/Formaldehydharz ist.

4. Das druckempfindliche Klebeband gemäß einem der Ansprüche 1 bis 3, welches 0,5 bis 10 Gew.-Teile des Vernetzungsmittels vom Isocyanat-Typ, 0,2 bis 2 Gew.-Teile des Vernetzungsmittels vom Glycidylamin-Typ, und 0,5 bis 10 Gew.-Teile des Vernetzungsmittels vom Melamin-Typ je 100 Gew.-Teile des Acrylcopolymers umfasst.

5. Verwendung des druckempfindlichen Klebebands gemäß einem der Ansprüche 1 bis 4 zum Schneiden von Halbleiter-Wafern.

6. Ein Verfahren zur Bearbeitung eines Halbleiter-Wafers, **dadurch** charakterisiert, dass das Verfahren den Schritt der Verwendung des druckempfindlichen Klebebands zum Schneiden gemäß Anspruch 5 zum Schneiden des Halbleiter-Wafers umfasst.

7. Ein druckempfindlicher Haftvermittler umfassend, als ein Basispolymer, ein Acrylpolymer, welches eine Carboxylgruppe hat, und weiterhin umfassend als Vernetzungsmittel, eine Mischung aus Vernetzungsmitteln, umfassend einen Vernetzungsvermittler vom Isocyanat-Typ, einen Vernetzungsvermittler vom Glycidylamin-Typ, und einen Vernetzungsvermittler vom Melamin-Typ.

8. Verwendung des druckempfindlichen Haftvermittlers gemäß Anspruch 7 zur Bildung einer Klebeschicht des druckempfindlichen Klebebands gemäß einem der Ansprüche 1 bis 4.

9. Das druckempfindliche Klebeband gemäß einem der Ansprüche 1 bis 4, worin der Haftvermittler kein Abschälkontrollmittel enthält.

## Revendications

1. Ruban adhésif sensible à la pression comportant un support et une couche adhésive ou des couches adhésives constituées d'un agent adhésif comportant un polymère de base et des agents de réticulation sur une surface unique du support, ou sur la surface et son autre surface,
**caractérisé en ce que** le support comporte du polychlorure de vinyle mou comportant un plastifiant, et
au moins l'agent adhésif sur la surface unique comporte, comme polymère de base, un copolymère acrylique ayant un groupe carboxyle, et comporte en outre, comme agents de réticulation, un mélange d'agents de réticulation comportant un agent de réticulation de type isocyanate, un agent de réticulation de type glycidylamine et un agent de réticulation de type mélamine.

2. Ruban adhésif sensible à la pression selon la revendication 1, dans lequel l'agent de réticulation de type glycidylamine est du 1,3-bis(N,N-diglycidylaminométhyl)cyclohexane.

3. Ruban adhésif sensible à la pression selon la revendication 1 ou 2, dans lequel l'agent de réticulation de type mélamine est une résine de mélamine/formaldéhyde modifiée par butanol.

4. Ruban adhésif sensible à la pression selon l'une quelconque des revendications 1 à 3, qui comporte 0,5 à 10 parties en poids de l'agent de réticulation du type isocyanate, 0,2 à 2 parties en poids de l'agent de réticulation du type glycidylamine, et 0,5 à 10 parties en poids de l'agent de réticulation du type mélamine, pour 100 parties en poids du copolymère acrylique.

5. Utilisation du ruban adhésif sensible à la pression selon l'une quelconque des revendications 1 à 4, pour découpage en tranche d'une plaquette à semi-conducteur.

6. Procédé pour usiner une plaquette à semi-conducteur, **caractérisé en ce qu'**il comporte l'étape consistant à utiliser le ruban adhésif sensible à la pression pour découpage en tranche selon la revendication 5, pour découper en tranche la plaquette à semi-conducteur.

7. Agent adhésif sensible à la pression, comportant, comme polymère de base, un copolymère acrylique ayant un groupe carboxyle, et comportant en outre, comme agents de réticulation, un mélange d'agents de réticulation comportant un agent de réticulation de type isocyanate, un agent de réticulation de type glycidylamine, et un agent de réticulation de type mélamine.

8. Utilisation de l'agent adhésif sensible à la pression selon la revendication 7 pour former la couche adhésive du ruban adhésif sensible à la pression selon l'une quelconque des revendications 1 à 4.

9. Ruban adhésif selon l'une quelconque des revendications 1 à 4, dans lequel ledit agent adhésif ne contient pas un quelconque agent de commande d'écaillage.
